# FASCICULE DE BREVET EUROPEEN

(11) **EP 0 369 852 B1**
(45) Date de publication et mention de la délivrance du brevet: **06.10.1993**
(21) Numéro de dépôt: 89403007.1
(22) Date de dépôt: 31.10.1989
(51) Int. Cl.: B23B 27/14, C04B 35/56, B24D 3/06

(54) **Procédé composite abrasif comportant une partie active de matériau ultra-dur et procédé de fabrication d'un tel produit**
Zusammensengesetztes Schneidmittel mit einem ultraharten Aktivteil und Verfahren zur Herstellung dieses Schneidmittels
Composite abrasive having an active part made of an extremely hard material, and process to make it

(30) Priorité: 03.11.1988 FR 8814335
(43) Date de publication de la demande: 23.05.1990
(73) Titulaire: SUPRADIAMANT Société anonyme de droit français, F-38113 Veurey-Voroize (FR)
(72) Inventeur: Cerceau, Jean-Michel, F-38170 Seyssinet (FR)
(74) Mandataire: Fort, Jacques

(56) Documents cités:
- EP-A- 0 081 775
- FR-A- 1 423 441
- FR-A- 2 144 426
- FR-A- 2 498 962

## Description

L'invention concerne les produits abrasifs composites du type comprenant une partie active constituée par un "compact" ayant une structure polycristalline et contenant des grains de matériau ultra-dur liés directement les uns aux autres et un support dur et réfractaire de carbure présentant une liaison métallurgique avec le compact. Le terme "compact" est utilisé ici pour désigner un produit fritté constitué par des grains liés entre eux par des ponts créés par diffusion de matière à l'état plastique.

On connaît déjà des produits composites du type ci-dessus défini dans lesquels le compact recouvre toute une face du support ou constitue un taillant encastré (FR-A-2 089 415). Les caractéristiques qui sont connues de la FR-A-2 089 415 sont indiquées dans la première partie de la revendication 1.

On connaît également (EP-A-0 081 775) des produits fabriqués par un procédé tel qu'il ne peut y avoir formation d'un compact annulaire de produit ultra-dur ayant des grains de matériau ultra-dur liés directement les uns aux autres et ayant une liaison métallurgique. Cela est dû notamment à ce que le "compact" est fixé, pour constituer le composite, par chauffage à une température suffisante pour infiltrer le silicium fondu contenu dans le compact et le faire réagir avec le carbone, mais inférieure à la température de graphitisation du diamant.

On connaît enfin des produits où le compact, en forme d'anneau, est fixé par brasage ou serrage dans un évidement annulaire du support, cet évidement étant délimité par une surface perpendiculaire à l'axe de l'anneau et par une surface interne parallèle à l'axe (EP-A-0 019 461).

D'après le document EP-A-0 019 461, cette disposition aurait l'avantage de réduire le coût du produit composite par une utilisation rationnelle de la partie abrasive, limitée à une zone utile périphérique étroite longeant l'arête de coupe. Effectivement, cette disposition permet de découper, dans un même compact de départ, plusieurs bandes concentriques de même forme et de diamètres différents et de les monter sur différents produits par brasage ou fixation mécanique. Comme dans le cas du produit défini dans le document GB-A-1 473 664, on profite du fait qu'un produit composite constitué d'une couche de matériau ultra-dur n'est en fait utilisé que sur une bande périphérique longeant l'arête de coupe. Mais le compact ultra-dur n'est pas fixé à son support par liaison métallurgique, ce qui fait perdre tous les avantages que donne une telle liaison.

Il est impossible de réaliser un produit véritablement composite (c'est-à-dire où le compact est fabriqué sur le support lui-même et a une liaison métallurgique avec lui) lorsque le compact annulaire occupe un évidement du support dont la section droite présente un angle vif. La raison en est que le retrait du compact lors du frittage à haute température et haute pression d'un composite créerait des contraintes provoquant une fissuration lors du refroidissement après frittage ou lors de l'utilisation du produit, sous l'effet des contraintes thermiques ou mécaniques, apparaissant alors.

L'invention vise à fournir un produit abrasif composite dont le compact est annulaire, répondant mieux que ceux antérieurement connus aux exigences de la pratique, notamment ce qu'il permet à la fois d'écarter le risque de rupture provoqué par les contraintes thermiques à l'interface et de réduire au minimum la masse de matériau ultra-dur.

Dans ce but, l'invention propose un produit abrasif composite ayant les caractéristiques définies dans la revendication 1. Le compact de ce produit peut se présenter sous forme d'un anneau de faible épaisseur axiale par rapport à celle du support, ayant une section droite approximativement en forme de triangle, généralement allongé dans le sens radial, l'une des faces du compact ayant une liaison métallurgique avec une partie circonférentielle chanfreinée du support et les autres faces se terminant par l'arête de coupe.

Les dimensions du chanfrein et celles du compact sont avantageusement proportionnées de façon que le composite présente une surface plane perpendiculaire à l'axe du compact annulaire.

Le terme "annulaire" utilisé ci-dessus ne doit pas être interprété comme imposant que le compact ait la forme d'un anneau complet. Si dans la majeure partie des cas, et notamment lorsque le produit a une forme de révolution, le compact représente effectivement l'anneau complet, il peut en être différemment, surtout lorsque le produit présente une forme prismatique. Dans ce cas, le compact peut être fractionné en plusieurs portions représentant des fractions d'un anneau, occupant les parties saillantes d'un prisme.

Quel que soit le mode de réalisation utilisé, on constate que la présence d'une seule surface oblique, au lieu de deux surfaces orthogonales qui créent des zones de concentration de contrainte, permet d'absorber ces dernières à un point tel qu'il devient possible de fixer le produit composite par brasage et de l'utiliser sans difficulté en tant qu'outil dans des conditions produisant un échauffement.

L'angle entre la surface du produit comportant l'arête de coupe et la face du compact ayant une liaison métallurgique (c'est-à-dire l'interface entre compact polycristallin et support) dépend de l'utilisation. Il est généralement compris entre 3° et 45°. Il est optimisé en fonction de l'épaisseur de compact ultra-dur désirée et de la largeur de la bande périphérique utile. Cette bande utile varie selon l'application : sur un produit destiné à l'usinage, elle est relativement étroite tandis que, sur un produit constituant un picot de forage, elle est beaucoup plus large.

Du fait que le compact est annulaire, il est possible de réaliser un produit composite percé d'un trou central de fixation sans difficulté. En effet, il suffit de donner à l'anneau des dimensions radiales telles que le trou à réaliser ne déborde pas sur le compact de matériau ultra-dur.

Un tel trou central est souvent extrêmement utile pour livrer passage à un élément de fixation mécanique sur un porte-outil (par exemple sur une machine d'usinage ou de havage) ou pour permettre l'écoulement d'un fluide de refroidissement, en cas d'utilisation pour du forage. Le perçage d'un trou dans le support de carbure métallique (carbure de tungstène en général) ne présente pas de difficultés : il peut notamment être fait par électro-érosion. Au contraire, il est difficile de percer un trou à travers l'ensemble du compact et du support d'un produit abrasif composite, car le produit abrasif en produit ultra-dur est mauvais conducteur électrique et se prête très mal au découpage par électro-érosion et le support est endommagé en cas de découpe au laser, utilisable pour le compact.

L'invention propose également un procédé de fabrication d'un produit abrasif composite du genre défini ci-dessus, suivant lequel : on place une couche annulaire de poudre de produit destiné à constituer le compact abrasif à la périphérie du fond d'une coupelle, en donnant à la couche une section droite approximativement en forme de triangle allongé ; on place, sur la couche, un support de carbure cémenté présentant, sur une face au moins, un chanfrein circonférentiel de forme correspondant à celle de la couche ; on densifie la couche annulaire par précompaction mécanique ; on porte la cellule contenant l'ensemble à une température dépassant 1200°C sous une pression dépassant 4,5 MN/m² (45 kbar) dans une presse et on maintient la cellule en température et en pression pendant une durée suffisante pour provoquer la formation d'un compact et d'une liaison métallurgique entre le compact et le support.

Pour améliorer la liaison entre le compact polycristallin et le support, on peut intercaler entre eux une couche destinée à constituer une barrière de diffusion et/ou une pellicule mince de métal utilisé comme liant catalyseur (par exemple cobalt ou nickel/chrome). De plus, afin d'éviter la diffusion du liant contenu dans le carbure, lorsqu'on utilise un compact ayant un liant thermostable, il est avantageux de prévoir, à l'interface, une couche d'un métal réfractaire comme, par exemple, le tungstène. On peut notamment utiliser dans ce cas le procédé décrit dans la demande de brevet EP-A-0 246 118.

L'invention sera mieux comprise à la lecture de la description qui suit de modes particuliers de réalisation, donnés à titre d'exemples non limitatifs. La description se réfère aux dessins qui l'accompagnent, dans lesquels :
- les Figures 1 et 2 montrent schématiquement, en élévation avec arrachement partiel, la constitution de deux produits suivant l'invention, destinés respectivement à constituer un picot de forage et une plaquette de coupe ;
- la Figure 3 montre schématiquement la mise en place des composants destinés à constituer un produit du genre montré en Figure 1 en vue de sa fabrication ;
- la Figure 4, similaire à la Figure 2, montre un produit abrasif utilisable comme plaquette de coupe, constituant une variante de réalisation de l'invention ;
- la Figure 5, similaire à la Figure 4, montre une autre variante encore ; et
- la Figure 6, similaire à la Figure 3, correspond à la fabrication d'un produit du genre montré en Figure 5.

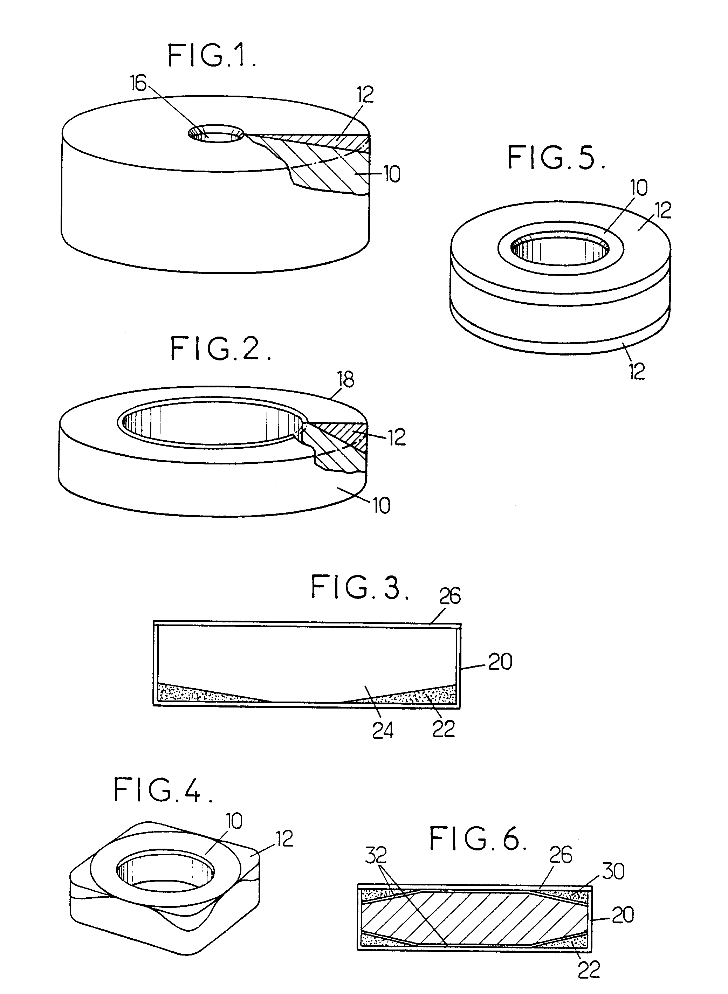

Les produits composites montrés en Figures 1 et 2 comportent l'un et l'autre un support 10 en carbure réfractaire fritté, dont on supposera qu'il contient du cobalt comme liant de frittage, et un compact 12 de produit ultra-dur ayant une liaison métallurgique avec le support. Le produit ultra-dur peut notamment contenir 80 à 95% en volume de grains de diamant, liés entre eux directement par pontage. Les vides entre les grains de diamant sont occupés par une phase liante qui peut être un élément du groupe du fer connu pour ses propriétés de catalyseur ou, notamment lorsqu'on souhaite disposer d'un produit thermostable, des composés tels que ceux décrits dans le document EP-A-0 246 188 déjà mentionné. Le produit ultra-dur peut être du nitrure de bore cubique ou CBN en substitution du diamant. Le liant utilisé dans ce cas est à base d'aluminium comme par exemple celui décrit dans le document EP-A-0 181 258.

Conformément à l'invention, le compact 12 présente une forme d'anneau à section triangulaire dont l'allongement dans le sens radial est choisi notamment en fonction de l'utilisation prévue pour le produit. Lorsqu'il est destiné à constituer un picot de forage (Figure 1), la largeur de l'anneau sera égale à une fraction notable du rayon du produit. Dans ce cas en effet, on utilisera généralement le produit jusqu'à une usure en cône importante. Souvent, lorsqu'un trou central 16 est nécessaire pour livrer passage à un boulon de fixation sur un porte-outil tel qu'une haveuse ou pour livrer passage à un fluide de refroidissement, ce trou pourra occuper tout l'espace radial à l'intérieur du compact annulaire. Lorsque le produit est destiné à être fixé sur un porte-outil d'usinage, la largeur de l'anneau et l'allongement de la section seront en général plus faibles (Figure 2). Le trou central 16, s'il est prévu, peut laisser subsister une zone annulaire apparente du support sur la face terminée par l'arête de coupe 18.

Les exemples non limitatifs ci-après correspondent à des produits qui ont été fabriqués et essayés avec de bons résultats.

### Exemple 1

Un picot de forage du genre montré en Figure 1, ayant les caractéristiques suivantes, a été réalisé :
- Diamètre :: 19,05 mm
- Hauteur :: 5 mm
- Compact :: de section triangulaire de 1mm de hauteur et 7 mm de largeur
- Support :: carbure de tungstène avec un chanfrein de 8°.

Pour fabriquer ce picot, on place, à la périphérie du fond d'une coupelle 20 en molybdène (Figure 3) une couche 22 de mélange constitué de 92% en volume de particules de diamant ayant une granulométrie comprise entre 12 et 22 µm et de 8% de poudre de cobalt. Sur cette couche est placé le support, constitué par un pion 24 en forme de cylindre chanfreiné obtenu par cémentation d'un mélange de 89% en poids de carbure de tungstène ayant une granulométrie d'environ 5 µm et de 11% de cobalt. Le pion 24 est pressé sur la partie active 22 pour densifier la couche de poudre entre chanfrein et paroi de la coupelle. La coupelle 20, fermée de façon étanche par un opercule 26, est portée à 5,5 MN/m² (55 kbar) et 1500°C pendant 4 mm pour provoquer le frittage du diamant, la pression étant maintenue pendant la montée et la descente en température. La coupelle est éliminée. Les faces sont rodées et le produit composite est rectifié. Pour une application particulière, un trou central 16, de diamètre sensiblement égal au diamètre interne du compact, a été percé par électro-érosion.

### Exemple 2

Le même procédé que dans l'Exemple 1 est utilisé, si ce n'est qu'une pellicule de cobalt de 40 µm d'épaisseur est disposée sur la face du pion en contact avec la poudre de diamant. Le taux de contrainte, évalué par mesure de la planéité de la "table" annulaire du compact avant et après coupe du support à mi-hauteur, est considérablement réduit par rapport à celui de l'Exemple 1.

### Exemple 3

Le même procédé que dans l'Exemple 1 est mis en oeuvre, si ce n'est que :
- la couche 22 est constituée de particules de diamant de 10 à 60 µm, avec une taille moyenne de 40 µm ;
- une pellicule destinée à constituer une barrière de diffusion, de 150 µm d'épaisseur, formée par un mélange de 50% en volume de poudre de WC électro-fondu de 80 µm de diamètre et de 50% en volume de poudre de diamant de 40 à 60 µm est interposée entre couche 22 et pion 24.

On n'observe ni délamination, ni fissuration après avoir soumis le produit composite à un gradient thermique rapide de 0 à 740°C, puis refroidissement à l'air.

### Exemple 4

Un produit composite destiné à constituer une plaquette de coupe est fabriqué par le même procédé que dans l'Exemple 1 avec les seules modifications suivantes :
Pion de formation du support : cylindre en carbure de tungstène, formé à partir de particules de 3 µm, a 8% de cobalt en masse, ayant, après mise en forme, un diamètre de 13,05 mm et un chanfrein à 14° réservant une hauteur de coupe de 0,7 mm et une largeur de 2,8 mm pour le compact.
Couche de formation du compact : 89% en volume de poudre de diamant de 5 à 8 µm et 11% de cobalt.
Frittage à 5,7 MN/m² (57 kbar) et 1550°C pendant 3,5 mn.

Le produit composite brut obtenu par le procédé est découpé par électro-érosion, puis affûté, pour fournir une plaquette du genre montré en Figure 4. On voit que seules les quatre arêtes de coupe sont recouvertes de diamant fritté, ce qui se traduit par un gain de temps de mise en forme (affutage) et un alésage rapide par électro-érosion à travers le carbure seul.

### Exemple 5

Un produit composite constitué d'un compact de CBN sur un support en carbure destiné à constituer un outil de coupe double face (figure 5), est réalisé par un procédé similaire à celui de l'Exemple 1.

Comme le montre la Figure 5, deux couches 22 et de poudre contenant du produit ultra-dur sont placées dans la coupelle 20 en molybdène, de part et d'autre du disque 24 en carbure de tungstène fritté contenant du cobalt comme liant, chanfreiné des deux côtés. Entre le disque 24 et les couches sont placées deux feuilles 32 de tungstène, recouvertes d'un dépôt mince de carbone sur les faces au contact du disque. Les couches 22 et 30 sont constituées d'un mélange de poudre de CBN de granulométrie 1 à 30 µm, contenant 10% en volume de liant constitué d'aluminium, de silicium et de carbone. Le frittage est effectué à 5,5 MN/m² (55 kbar) et 1450°C pendant 5 mn.

L'intérêt de ce type d'outil, également réalisable avec du diamant, est de présenter deux faces de coupe, de permettre le perçage par électro-érosion (EDM) et de gagner du temps pour l'affûtage et le rodage grâce à la réduction de la quantité de CBN.

De nombreuses variantes de réalisation sont encore possibles, mettant notamment en oeuvre des solutions permettant d'obtenir des produits thermostables. Il faut en particulier noter que le liant catalyseur du produit ultra-dur peut être soit mélangé aux particules de ce produit, soit déposé au préalable sur le support. Dans le cas de diamant polycristallin diamant sur support WC, le liant peut être infiltré à partir du support. Il est également possible d'adopter une section droite de compact qui n'est pas exactement en forme de triangle, mais s'en rapproche.

En général, l'angle du chanfrein (et donc de la section du compact) sera compris entre 3° et 15° dans le cas d'un picot, de 8° à 25° dans le cas d'un outil d'usinage.

## Revendications

1. Produit abrasif composite comprenant une partie active constituée par un compact (12) ayant une structure polycristalline et contenant des grains de matériau ultradur liés directement les uns aux autres et un support (10) dur et réfractaire de carbure présentant une laison métallurgique avec une face du compact dont d'autres faces se terminent par une arête de coupe (18), caractérisé en ce que le compact (12) se présente sous forme d'un anneau dont l'épaisseur axiale à la périphérie est faible par rapport à celle du support, ayant une section droite en forme générale de triangle, la liaison métallurgique étant avec une partie circonférentielle chanfreinée du support.

2. Produit abrasif composite selon la revendication 1, caractérisé en ce que le compact annulaire présente une surface plane perpendiculaire à l'axe du compact.

3. Produit abrasif composite selon la revendication 1 ou 2, caractérisé en ce que la section droite est en forme de triangle allongé dans le sens radial.

4. Produit abrasif composite selon la revendication 1, 2 ou 3, caractérisé en ce que le compact est fractionné en plusieurs portions représentant des fractions d'un anneau, occupant les parties saillantes d'un support en forme de prisme.

5. Produit abrasif composite selon l'une quelconque des revendications 1 à 4, caractérisé en ce que l'angle au sommet du triangle est compris entre 3° et 45°.

6. Produit abrasif composite selon l'une quelconque des revendications 1 à 5, caractérisé en ce que le produit comporte un compact sur chacune des deux faces terminales du support.

7. Produit abrasif composite selon l'une quelconque des revendications 1 à 6, caractérisé en ce qu'il est percé d'un trou concentrique (16) au compact (12), traversant uniquement le support (10).

8. Procédé de fabrication d'un produit abrasif selon l'une quelconque des revendications 1 à 6, caractérisé en ce que : on place une couche annulaire (22) de poudre de produit destiné à constituer le compact abrasif à la périphérie du fond d'une coupelle (20), en donnant à la couche une section droite approximativement en forme de triangle allongé ; on place, sur la couche, un support (24) de carbure cémenté présentant, sur une face au moins, un chanfrein circonférentiel de forme correspondant à celle de la couche ; on densifie la couche annulaire par précompaction mécanique ; on porte la cellule contenant l'ensemble à une température dépassant 1200°C sous une pression dépassant 4,5 MN/m² (45 kbar) dans une presse et on maintient la cellule en température et en pression pendant une durée suffisante pour provoquer la formation d'un compact et d'une liaison métallurgique entre le compact et le support.

9. Procédé selon la revendication 8, caractérisé en ce qu'on intercale, entre la poudre destinée à constituer le compact et le support une couche (32) destinée à constituer barrière de diffusion et/ou une pellicule mince de cobalt ou d'un autre métal catalyseur.

10. Procédé selon la revendication 8, caractérisé en ce qu'on intercale, entre la poudre destinée à constituer le compact et le support, une couche de métal réfractaire (32) destinée à éviter la diffusion du liant du support vers le compact.

## Claims

1. Composite abrasive product comprising an active part formed by a compact (12) having a polycristalline structure and containing grains of ultra-hard material bonded directly together and a hard refractory carbide support (10) having a metallurgical bond with a surface of the compact which has other surfaces terminated at a cutting edge (18), characterized in that the compact (12) is in the form of a ring having an axial thickness at the periphery thereof which is small as compared with that of the support, with a cross-section approximately in the form of a triangle, the metallurgical bond being with a chamfered circumferential part of the support.

2. Composite abrasive product according to claim 1, characterized in that the annular compact has a flat surface perpendicular to the axis of the compact.

3. Composite abrasive product according to claim 1 or 2, characterized in that the cross-section is in the shape of a radially elongated triangle.

4. Composite abrasive product according to claim 1, 2 or 3, characterized in that the compact is split up into several portions representing fractions of a ring, occupying the projecting portions of a prism-shaped support.

5. Composite abrasive product according to any one of claims 1 to 4, characterized in that the angle at the apex of the triangle is between 3° and 45°.

6. Composite abrasive product according to any one of claims 1 to 5, characterized in that the product comprises a compact on each of the two end surfaces of the support.

7. Composite abrasive product according to any one of claims 1 to 6, characterized in that it is formed with a hole (16) concentric with the compact (12), passing solely through the support (10).

8. Method of manufacturing an abrasive product according to any one of claims 1 to 6, characterized by the steps of: placing an annular layer (22) of a powder of the product intended to form the abrasive compact at the periphery of the bottom of a cup (20), while giving to the layer a cross-section approximately in the form of an elongated triangle; placing on the layer a cemented carbide support (24) having, on one face at least, a circumferential chamfer of a shape corresponding to that of the layer; densifying the annular layer by mechanical pre-compacting; bringing the cell containing the assembly to a temperature exceeding 1200°C at a pressure exceeding 4.5 MN/m² (45 kbar) in a press and maintaining the cell at these temperature and pressure for a time sufficient to cause the formation of a compact and a metallurgical bond between the compact and the support.

9. Method according to claim 8, characterized in that a layer (32) intended to form a diffusion barrier and/or a thin film of cobalt or of an other catalyst metal is placed between the powder intended to form the compact and the support.

10. Method according to claim 8, characterized in that a refractory metal layer (32) intended to prevent diffusion of the binder from the support towards the compact is inserted between the powder intended to form the compact and the support.

## Patentansprüche

1. Zusammengesetztes Schleifprodukt mit einem aktiven Teil, welcher von einem Kompakt (12), welches eine polykristalline Struktur aufweist und Körner aus ultrahartem Material enthält, die direkt nebeneinander liegen, und von einer harten und feuerfesten Auflage aus Kohlenstoff gebildet ist, welche eine metallurgische Verbindung mit einer Fläche des Kompaktes aufweist, dessen andere Flächen sich in einer Schneidkante (18) begrenzen,
dadurch gekennzeichnet,
daß das Kompakt (12) in Form eines Ringes ausgebildet ist, dessen axiale Dicke am Umfang im Verhältnis zu der der Auflage gering ist und welcher einen Querschnitt in einer Dreiecksform aufweist, wobei die metallurgische Verbindung mit einem abgeschrägten Umfangsteil der Auflage besteht.

2. Zusammengesetztes Schleifprodukt nach Anspruch 1,
dadurch gekennzeichnet,
daß das ringförmige Kompakt eine ebene Oberfläche rechtwinklig zur Achse des Kompaktes aufweist.

3. Zusammengestztes Schleifprodukt nach Anspruch 1 oder 2,
dadurch gekennzeichnet,
daß der Querschnitt in Form eines länglichen Dreieckes in radialer Richtung gesehen ist.

4. Zusammengestztes Schleifprodukt nach Anspruch 1, 2 oder 3,
dadurch gekennzeichnet,
daß das Kompakt in mehrere Bereiche getrennt ist, welche Ringfraktionen darstellen und die vorspringenden Bereiche einer Auflage in Form eines Prismas besetzen.

5. Zusammengesetztes Schleifprodukt nach irgendeinem der Ansprüche 1 bis 4,
dadurch gekennzeichnet,
daß der Spitzenwinkel des Dreiecks zwischen 3° und 45° liegt.

6. Zusammengesetztes Schleifprodukt nach irgendeinem der Ansprüche 1 bis 5,
dadurch gekennzeichnet,
daß das Produkt ein Kompakt auf jeder der beiden Endflächen der Auflage aufweist.

7. Zusammengesetztes Schleifprodukt nach irgendeinem der Ansprüche 1 bis 6,
dadurch gekennzeichnet,
daß es von einem zu dem Kompakt (12) konzentrischen Loch (16) durchdrungen ist, welches nur die Auflage (10) durchdringt.

8. Verfahren zur Herstellung eines Schleifproduktes nach irgendeinem der Ansprüche 1 bis 6,
dadurch gekennzeichnet,
daß man eine ringförmige Schicht (22) aus Puder eines Produktes zur Bildung des abschleifenden Kompaktes am Umfang des Bodens einer Schale (20) anordnet, wobei man der Schicht im Querschnitt annähernd eine längliche Dreiecksform gibt, daß man auf der Schicht eine Auflage (24) aus einem gehärteten Kohlenstoff anordnet, welche auf wenigstens einer Fläche eine abgeschrägte Umfangsform entsprechend derjenigen der Schicht aufweist, daß man die ringförmige Schicht durch mechanische Vorverfestigung verdichtet, daß man die die Gesamtheit tragende Schale auf eine Temperatur von wenigstens 1200° C bei einem Druck von wenigstens 4,5 MN/m² in einer Presse bringt, und daß man die Schale bei dieser Temperatur und bei diesem Druck während einer ausreichend langen Zeit hält, um die Bildung eines Kompaktes und eine metallurgische Verbindung zwischen dem Kompakt und der Auflage hervorzurufen.

9. Verfahren nach Anspruch 8,
dadurch gekennzeichnet,
daß man zwischen dem Puder zur Bildung des Kompaktes und der Auflage eine Schicht (32) zur Bildung einer Diffusionsbarriere und/oder einen dünnen Film aus Kobalt oder einem anderen Metallkatalysator anordnet.

10. Verfahren nach Anspruch 8,
dadurch gekennzeichnet,
daß man zwischen dem Puder zur Bildung des Kompaktes und der Auflage eine feuerfeste Metallschicht (32) zur Vermeidung der Diffusion des Bindemittels von der Auflage in das Kompakt anordnet.
